# EUROPÄISCHE PATENTSCHRIFT

(11) **EP 2 386 210 B1**
(45) Veröffentlichungstag und Bekanntmachung des Hinweises auf die Patenterteilung: **22.04.2015**
(21) Anmeldenummer: 11002485.8
(22) Anmeldetag: 25.03.2011
(51) Int. Cl.: B65B 25/06, A23L 1/31, A23L 1/325, A23P 1/10, A23L 1/05, A23L 1/212, A23B 4/005, A22C 7/00

(54) **Verfahren zur Herstellung einer Lebensmittel-in-Aspik Speise**
Method for producing a food-in-aspic food dish
Procédé de fabrication d'un plat d'aliments gélatineux

(30) Priorität: 14.05.2010 DE 102010020559
(43) Veröffentlichungstag der Anmeldung: 16.11.2011
(73) Patentinhaber: VASSEMER Geflügelfeinkost GmbH, 33775 Versmold (DE)
(72) Erfinder:
(74) Vertreter: Walther, Walther & Hinz GbR

(56) Entgegenhaltungen:
- DE-A1- 3 300 300
- FR-A1- 2 652 994

## Beschreibung

Die vorliegende Erfindung betrifft ein Verfahren zur Herstellung einer Lebensmittel-in-Aspik Speise gemäß dem Oberbegriff des Anspruches 1.

Zur Herstellung einer Lebensmittel-in-Aspik Speise, gelegentlich auch Sülze genannt, wird das vorbereitete Fleisch oder der vorbereitete Fisch oder das vorbereitete Gemüse in eine Schale gelegt und mit einem erwärmten und deshalb flüssigen Gelee übergossen. Mit dem Erkalten des Gelees erstarrt dieses, so dass die Speise anschließend gut transportiert und auch in Scheiben geschnitten werden kann. Es versteht sich, dass neben dem Hauptlebensmittel, also dem Fisch, dem Fleisch oder dem Gemüse, noch ergänzende Lebensmittel wie z. B. Gewürze oder Obst, bzw. Gemüsebeilagen hinzugefügt werden können.

Aus der DE 43 34 119 C1 ist ein Verfahren zum Herstellen einer Schinkenspeise bekannt, bei dem aus einer wasserfesten Folie eine heiße Aspikmasse verteilt wird, in die Lebensmittel eingebettet werden, bevor alles zusammen mit Schinkenstücken in einem Gargefäß eingelegt wird. Überstehende Randstreifen der Folie werden umgeschlagen, das Gargefäß wird verschlossen und samt Inhalt erhitzt.

Nachdem das Gelee erkaltet und damit erstarrt ist, wird es in eine in der Regel durchsichtige Folie verpackt und kann somit hygienisch einwandfrei gelagert und transportiert werden. Dabei hat es sich als vorteilhaft erwiesen, die Speise vakuum zu verpacken, was eine längere Haltbarkeit der Speise zur Folge hat.

Aus der DE 1 857 925 U ist es bekannt, Fleischerzeugnisse in Aspik luftfrei zu verpacken, wobei durch eine vorbestimmte und begrenzte Wärme- und Druckeinwirkung ein besonders schnelles und luftdichtes Verpacken erreicht wird. Weil das Aspik zunächst flüssig und nach dem Erkalten starr ist, ist es nicht möglich, der fertigen Lebensmittel-in-Aspik Speise eine bestimmte Kontur zu geben.

Aus der DE 20 2006 016 010 U1 ist eine Vorrichtung zum Reliefieren von Nahrungsmitteln bekannt, mit der auf in Konserven aufbewahrte Nahrungsmittel ein Oberflächenrelief gebildet werden kann. Der Einsatz einer solchen Vorrichtung ist aber bei Lebensmittel-in-Aspik Speisen ungeeignet, da die Konserven undurchsichtig sind. Bei Aspikspeisen jedoch ist die Sichtbarkeit der einzelnen Zutaten eine wesentliche Information zur Kaufentscheidung, weshalb Aspikspeisen in einer Klarsichtverpackung ausgeliefert werden.

Bei der Kaufentscheidung des Kunden für eine bestimmte Aspik Speise spielt neben dem Geschmack auch das äußere Aussehen eine nicht unerhebliche Rolle. Aus diesem Grunde ist es wünschenswert, die Aspik Speise in eine gefällige Form zu bringen.

Davon ausgehend liegt der vorliegenden Erfindung die Aufgabe zugrunde, ein Verfahren zur Herstellung einer Aspik Speise der eingangs genannten Art zu schaffen, mit dem der Aspik Speise eine spezielle Kontur gegeben werden kann.

Als technische Lösung dieser Aufgabe wird erfindungsgemäß ein Herstellungsverfahren für eine Aspik Speise mit den Merkmalen des Anspruches 1 vorgeschlagen. Vorteilhafte Weiterbildungen dieses Verfahrens sind den Unteransprüchen zu entnehmen.

Ein nach dieser technischen Lehre ausgeführtes Verfahren hat den Vorteil, dass sich der Aspik beim Aufkochen verflüssigt und dass somit die Speise die Kontur der Negativform annimmt, so dass nach dem Erkalten des Aspik die gesamte Speise erstarrt und die Kontur der Negativform annimmt und konserviert.

Dabei hat es sich als vorteilhaft erwiesen, die Speise vakuum zu verpacken und während des zweiten Aufkochens in der Vakuumver-packung zu belassen. Durch die Vakuumverpackung wird sichergestellt, dass innerhalb der Verpackung keinerlei Luft verbleibt, die sich beim zweiten Aufkochen ausdehnen und gegebenenfalls die Verpackung sprengen könnte. Ein weiterer Vorteil besteht darin, dass durch die Vakuumverpackung der Aspik Speise die Verpackung ebenfalls die Kontur der Negativform annimmt und somit die Kontur der gesamten Speise bekommt.

In einer besonders vorteilhaften Ausführungsform wird die Speise während des zweiten Aufkochens mit einem Gewicht beschwert. Durch dieses Gewicht werden Kräfte auf die Speise und deren Verpackung ausgeübt, so dass die Speise während des zweiten Aufkochens auch komplizierte und filigrane Konturen annehmen kann, da mittels des Gewichts die Speise und gegebenenfalls deren Verpackung in jede Ecke, Rille oder Vertiefung der Negativform gedrückt wird.

In einer besonders vorteilten Ausführungsform wird vor dem Einlegen der Lebensmittel in der Schale ein Spiegel erstellt. Durch diesen Spiegel werden in der Speise entweder weitere Lebensmittel hinzugefügt oder die eigentlichen Lebensmittel können in einer optisch gefälligen Form angeordnet werden. Dabei hat es sich als vorteilhaft erwiesen, zunächst den Spiegel fertig zu stellen und das zum Spiegel gehörende Aspik erkalten zu lassen, bevor der Rest der Speise erstellt wird.

Weitere Vorteile des erfindungsgemäßen Herstellungsver-fahrens für eine Aspik Speise ergeben sich aus der beigefügten Zeichnung und den nachstehend beschriebenen Ausführungsformen. Ebenso können die vorstehend genannten und die noch weiter ausgeführten Merkmale jeweils einzeln oder in beliebigen Kombinationen miteinander verwendet werden. Es zeigen:

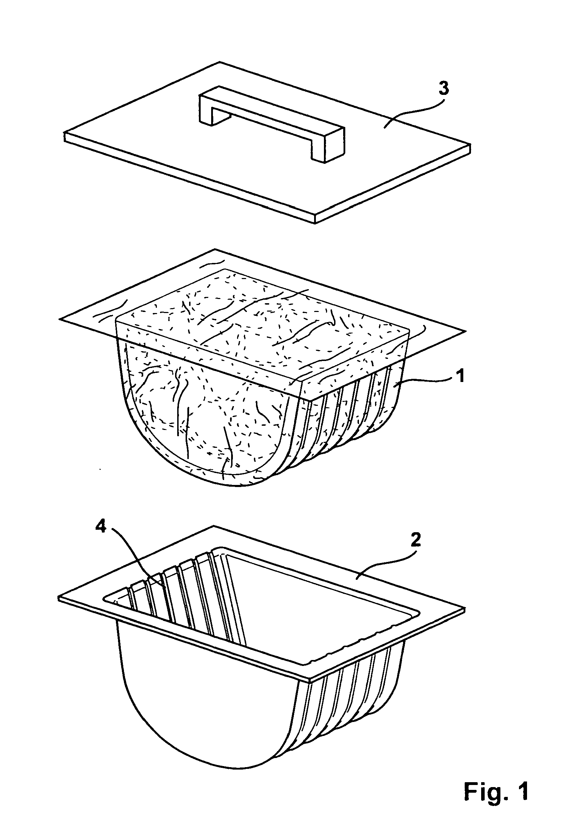

- Fig. 1: eine Explosionsdarstellung einer Aspik Speise und der diesbezüglichen Negativform, sowie des Gewichtes.

Bei einer Lebensmittel in Aspik Speise ist das Hauptlebens-mittel von einem geleeartigen Aspik umgeben. Dieses Hauptlebensmittel kann beispielsweise Geflügel, Fisch, Schweinefleisch, Rindfleisch, Wild oder auch verschiedenes Gemüse sein, welches zunächst einmal verzehr-fertig vorbereitet wird, bevor es in eine entsprechende Schale eingelegt wird. Dabei kann durch die Anordnung der einzelnen Fleisch-, Fisch- oder Gemüsestücke ein bestimmtes Bild entstehen. Anschließend wird die Schale mit heißem und deshalb flüssigem, geleeartigem Aspik aufgefüllt, bevor die Speise etwa 3 Stunden gekocht wird. Die derart vorbereitete Speise wird dann zum Erkalten einige Stunden stehen gelassen.

Nachdem das Aspik auf Umgebungstemperatur, vorzugsweise zwischen 0 °C und 7 °C, abgekühlt ist, ist das Aspik entsprechend erstarrt, so dass diese Speise die Kontur der Schale angenommen hat. Diese Speise wird dann in eine transparente Kunststofffolie verpackt und vakuumiert.

Wie in der Zeichnung ersichtlich ist, wird die vakuumver-packte Speise 1 anschließend in eine Negativform 2 eingelegt und mit einem Gewicht 3 beschwert. In der hier dargestellten Ausführungsform ist die Negativform an ihrer Unterseite tonnenartig ausgebildet und an ihrer Oberseite offen, so dass die Speise 1 an der Oberseite der Negativform 2 eben ausgebildet ist. Die Negativform 2 besitzt auf ihrer Unterseite im Bereich der tonnenförmigen Ausbildung eine Anzahl von wulstartigen Vorsprüngen 4.

Nachdem die vakuumverpackte Speise 1 in der Negativform 2 eingelegt und durch das Gewicht 3 beschwert ist, wird die Speise 1 ein zweites Mal aufgekocht. Die Kochzeit beträgt dieses Mal nur 30 Minuten. Nun verflüssigt das geleeartige Aspik erneut und kann so optimal die Kontur der Negativform 2 annehmen, wobei sich im Bereich der tonnenförmigen Auswölbung korrespondierend zu den wulstartigen Vorsprüngen 4 entsprechende Rillen ausbilden. Nachdem die Speise 1 erneut auf Umgebungstemperatur erkaltet ist, erstarrt das Aspik und gibt der Speise 1 dauerhaft die von der Negativform 2 vorgegebene Kontur. Nun kann die Speise 1 der Negativform entnommen werden. Da die Speise 1 nach wie vor vakuumverpackt ist, kann diese umgehend in den Verkauf gebracht werden.

## Patentansprüche

1. Verfahren zur Herstellung einer Lebensmittel-in-Aspik Speise, wobei Lebensmittel, in eine Schale eingelegt werden, bevor die Schale mit flüssigem Aspik aufgefüllt wird und bevor alles in der Schale aufgekocht wird, wobei die Speise (1) nach dem Erstarren des Aspiks der Schale entnommen und verpackt wird,
**dadurch gekennzeichnet,**
**dass** die verpackte Speise (1) in eine Negativform (2) eingelegt wird und in dieser ein zweites Mal erwärmt, insbesondere aufgekocht, wird, und dass die verpackte Speise (1) bis zum Wiedererstarren des Aspiks in der Negativform (2) verbleibt.

2. Verfahren nach Anspruch 1,
**dadurch gekennzeichnet,**
**dass** die Speise (1) vakuumverpackt wird und während des zweiten Aufkochens vakuumiert bleibt.

3. Verfahren nach einem der vorangehenden Ansprüche,
**dadurch gekennzeichnet,**
**dass** die Speise (1) während des zweiten Aufkochens mit einem Gewicht (3) beschwert wird.

4. Verfahren nach einem der vorangehenden Ansprüche,
**dadurch gekennzeichnet,**
**dass** vor dem Einlegen der Lebensmittel in der Schale ein Spiegel erstellt wird.

5. Verfahren nach Anspruch 4,
**dadurch gekennzeichnet,**
**dass** der Spiegel durch Einlegen von Lebensmitteln, insbesondere von Obststücken, und Aufgießen der Lebensmittel mit flüssigem Aspik erstellt wird.

6. Verfahren nach einem der vorangehenden Ansprüche,
**dadurch gekennzeichnet,**
**dass** die Lebensmittel Fleisch-, Fisch- oder Gemüsestücke sind.

7. Verfahren nach Anspruch 6
**dadurch gekennzeichnet,**
**dass** die Fleisch-, Fisch- oder Gemüsestücke zusammen mit weiteren Lebensmittel in eine Schale gelegt werden.

## Claims

1. A method for producing a food-in-aspic food dish, wherein food is placed into a bowl before filling the bowl with liquid aspic and before boiling up the entire content of the bowl, wherein the food dish (1) is removed from the bowl, once it has congealed, and packaged,
**characterized in that**
the packaged food dish (1) is placed into a negative mould (2) and heated up, in particular boiled up, therein for a second time and that the packaged food dish (1) remains in the negative mould (2) until the aspic has congealed again.

2. The method according to claim 1,
**characterized in that**
the food dish (1) is vacuum-packed and remains under vacuum during the second boil-up.

3. The method according to one of the afore-mentioned claims,
**characterized in that**
the food dish (1) is loaded with a weight (3) during the second boil-up.

4. The method according to one of the afore-mentioned claims,
**characterized in that**
a mirror is formed before placing the food into the bowl.

5. The method according to claim 4,
**characterized in that**
the mirror is formed by placing food, more specifically pieces of fruit, into the bowl and by pouring liquid aspic onto the food.

6. The method according to one of the afore-mentioned claims,
**characterized in that**
the food is meat, fish or vegetable pieces.

7. The method according to claim 6,
**characterized in that**
the meat, fish or vegetable pieces are placed into a bowl together with other foods.

## Revendications

1. Procédé de fabrication d'un plat d'aliments gélatineux, lors duquel des aliments sont placés dans un bol avant de remplir le bol d'aspic liquide et avant de faire bouillir le tout dans le bol, où le plat (1) est retiré du bol, une fois que l'aspic s'est solidifié, et emballé,
**caractérisé en ce que**
le plat (1) emballé est placé dans un moule négatif (2) et y est chauffé, en particulier bouilli, une deuxième fois et **en ce que** le plat (1) emballé reste dans le moule négatif (2) jusqu'à solidification de l'aspic.

2. Procédé de fabrication selon la revendication 1,
**caractérisé en ce que**
le plat (1) est emballé sous vide et reste sous vide lorsqu'il est porté à ébullition pour la deuxième fois.

3. Procédé selon l'une quelconque des revendications précédentes,
**caractérisé en ce que**
le plat (1) est alourdi à l'aide d'un poids (3) lorsqu'il est porté à ébullition pour la deuxième fois.

4. Procédé selon l'une quelconque des revendications précédentes,
**caractérisé en ce que**
un miroir est formé dans le bol avant d'y placer les aliments.

5. Procédé selon la revendication 4,
**caractérisé en ce que**
le miroir est formé en déposant des aliments, en particulier des morceaux de fruits, dans le bol et en versant l'aspic liquide sur les aliments.

6. Procédé selon l'une quelconque des revendications précédentes,
**caractérisé en ce que**
les aliments sont des morceaux de viande, de poisson ou de légumes.

7. Procédé selon la revendication 6,
**caractérisé en ce que**
les morceaux de viande, de poisson ou de légumes sont placés avec d'autres aliments dans le bol.
